# FASCICULE DE BREVET EUROPEEN

(11) **EP 0 617 536 B1**
(45) Date de publication et mention de la délivrance du brevet: **16.05.2001**
(21) Numéro de dépôt: 94400621.2
(22) Date de dépôt: 23.03.1994
(51) Int. Cl.: H04M 1/02

(54) **Terminal radiotéléphonique portatif compact**
Tragbares und kompaktes Funkfernsprechgerät
Portable and compact radiotelephone terminal

(30) Priorité: 23.03.1993 FR 9303315
(43) Date de publication de la demande: 28.09.1994
(73) Titulaire: ALCATEL, 75008 Paris (FR)
(72) Inventeur: Muller, Jacques, F-95280 Jouy le Moutier (FR)
(74) Mandataire: El Manouni, Josiane

(56) Documents cités:
- EP-A- 0 275 996
- WO-A-91/14332
- AU-D- 8 367 691
- FR-A- 2 601 211
- US-A- 5 027 394
- PATENT ABSTRACTS OF JAPAN vol. 17, no. 137 (E-1335) 22 Mars 1993 & JP-A-04 307 841 (HITACHI LTD)
- NACHRICHTENTECHNISCHE ZEITSCHRIFT, vol.40, no.4, Avril 1987, BERLIN pages 302 - 303 CLOKE 'STROMVERSORGUNG SCHNURLOSER TELEFONAPPARATE'

## Description

La présente invention concerne un terminal radiotéléphonique portatif compact.

On appelle terminal radiotéléphonique un appareil muni notamment d'un écouteur, d'un micro, d'un clavier de numérotation et de moyens émetteurs-récepteurs. Un tel terminal doit être aussi compact que possible pour pouvoir être aisément manipulé à proximité du visage de l'utilisateur pendant les communications, et être aussi peu encombrant que possible pendant les périodes hors communications.

A titre d'exemples de documents décrivant de tels terminaux, on peut citer:
- le document FR-A-2 601 711, qui décrit un terminal portatif repliable, formé de deux boîtiers, ou coffrets, renfermant chacun un certain nombre de composants constitutifs de ce terminal. L'un de ces boîtiers renferme en particulier un écouteur et une source autonome d'énergie électrique. L'autre de ces boîtiers renferme en particulier un microphone.
- le document WO 91 14 332 qui décrit un terminal portatif repliable, comportant un terminal radiotéléphonique, et un récepteur d'appels (ou terminal de radiomessagerie), détachable du terminal radiotéléphonique. Le terminal radiotéléphonique est lui-même formé d'une part d'un corps principal, contenant en particulier une source d'énergie, et d'autre part d'une partie articulée contenant en particulier un microphone. Sur cette partie articulée peut venir se connecter le récepteur d'appels.
- le document US-A-5 027 394 qui décrit également un terminal portatif repliable, formé de deux boîtiers, renfermant chacun un certain nombre de composants constitutifs de ce terminal. L'un de ces boîtiers renferme en particulier un écouteur. L'autre de ces boîtiers renferme en particulier un microphone. Une source d'énergie est par ailleurs prévue dans la partie servant d'articulation entre les deux boîtiers.
- le document AU-B-8 367 691 qui décrit également un terminal radiotéléphonique portatif repliable formé de deux segments plats, renfermant chacun un certain nombre de composants constitutifs de ce terminal. L'un de ces segments plats renferme en particulier un écouteur. L'autre de ces segments plats renferme en particulier un microphone, et un bloc accumulateur amovible.
- le document Patent abstracts of Japan, vol.17, n°137 (E-1335) qui décrit également un terminal radiotéléphonique portatif repliable formé de deux éléments, renfermant chacun un certain nombre de composants constitutifs de ce terminal. L'un de ces éléments renferme en particulier un micrcrophone et une batterie. L'autre de ces éléments renferme en particulier un écouteur.

Pour son alimentation, le terminal comporte souvent un bloc accumulateur monté de manière amovible du côté du boîtier qui est opposé au visage pendant la communication. La présence de ce bloc donne au terminal une épaisseur assez importante peu favorable à une bonne tenue de l'appareil pendant les communications.

Par ailleurs, on connaît les terminaux portatifs comportant une palette destinée à se placer sensiblement devant la bouche de l'utilisateur pour recevoir le son de la voix. Cette palette contient le microphone, ou encore constitue un simple réflecteur inerte renvoyant le son vers le microphone placé plus près de l'écouteur. Une tendance actuelle consiste à réaliser une telle palette pivotante, de manière qu'en dehors des périodes d'utilisation, la palette soit rabattue sur le clavier de manière à raccourcir l'encombrement en longueur. Pour éviter d'aboutir à une sur-épaisseur supplémentaire, la palette est alors réalisée aussi mince que possible.

Le but de l'invention est de proposer un appareil qui soit plus aisé à manipuler tout en étant encore plus compact lorsqu'il est inutilisé.

Suivant l'invention, le terminal radiotéléphonique portatif, comprenant un corps, un bloc accumulateur amovible, et une palette, cette palette étant articulée au corps du terminal entre une position de service dans laquelle elle se trouve devant la bouche de l'utilisateur et une position rabattue sur le corps, est caractérisé en ce que cette palette constitue un réflecteur destiné à renvoyer le son vers un microphone et en ce que le bloc accumulateur constitue en lui-même ladite palette.

Grâce à cette disposition, le corps de l'appareil n'est plus surépaissi par le bloc accumulateur. Au contraire, la palette devient plus volumineuse et sa section transversale est du même ordre de grandeur que celle du corps. Le terminal est plus facile à saisir grâce à son corps plus mince.

La palette devient plus longue que dans les réalisations antérieures. Si elle est articulée, le terminal devient donc plus court à l'état replié, ce qui réduit alors son encombrement. En effet, la longueur totale du terminal lorsque la palette est déployée varie peu car elle est fonction de la distance entre la bouche et l'oreille d'un utilisateur moyen.

D'autres particularités et avantages de l'invention ressortiront encore de la description ci-après, relative à un exemple non limitatif.

Aux dessins annexés, destinés à faire comprendre la présente invention:
- la figure 1 est une vue d'un terminal en position repliée, avec en outre une représentation partielle d'un socle d'une palette à l'état déployé, et représentation d'un bloc accumulateur destiné à s'y insérer ;
- la figure 2 est une vue partielle du terminal, partiellement en coupe, avec le bloc accumulateur prêt à s'insérer dans le socle de la palette déployée ; et
- la figure 3 est une vue analogue à la figure 2 mais avec la palette repliée et le bloc accumulateur en place.

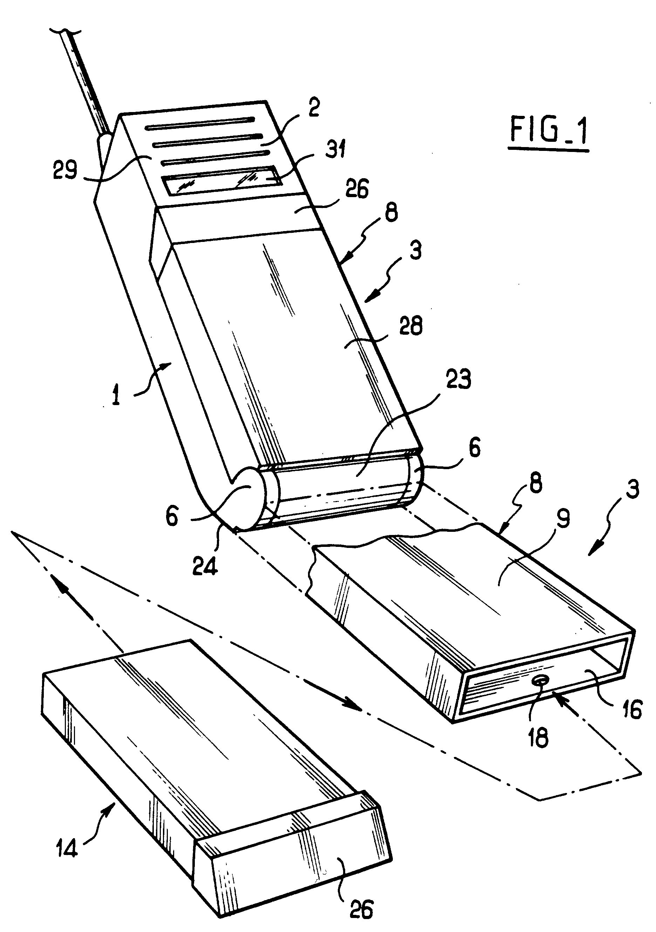

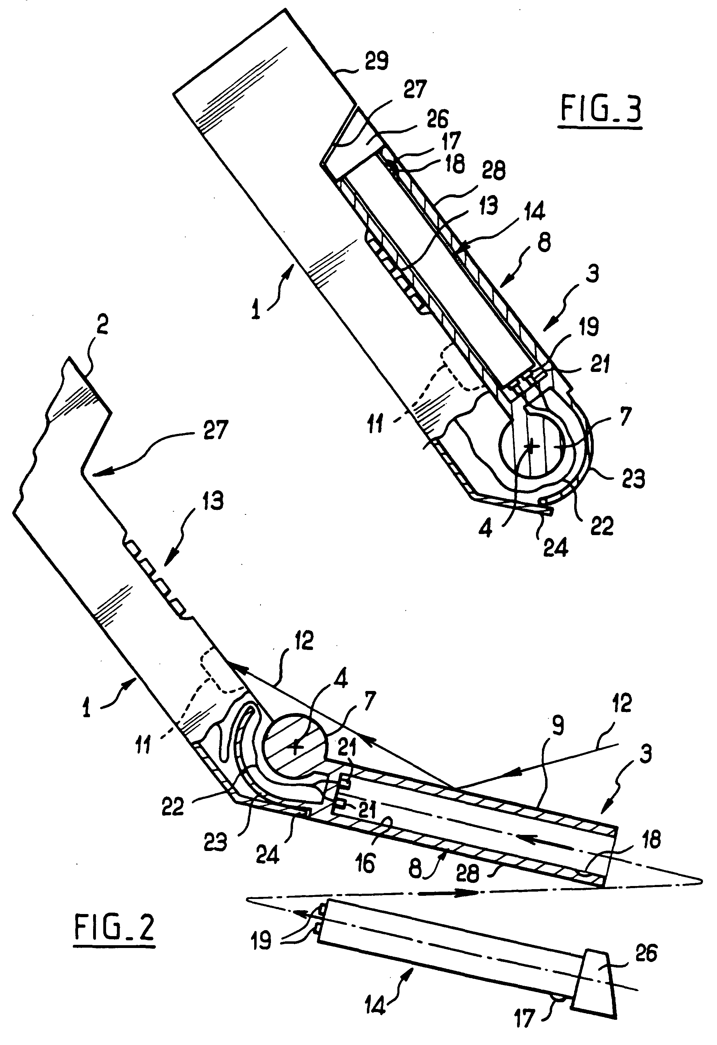

Dans l'exemple représenté aux figures, le terminal comprend un corps 1 dont une face frontale comporte un écouteur 2 au voisinage de l'une de ses extrémités. A son autre extrémité, le corps 1 est articulé à une palette repliable 3 mobile par pivotement autour d'un axe 4 entre la position déployée représentée à la figure 2 et la position repliée représentée à la figure 3. Comme représenté à la figure 1, les moyens de pivotement comprennent par exemple deux joues 6 solidaires du corps 1 (figure 1) auxquelles est articulé un tourillon 7 solidaire d'un socle 8 de la palette 3 (figures 2 et 3).

Lorsque la palette 3 est déployée (bas de la figure 1 et figure 2), une face avant 9 du socle 8 est située en face de la bouche de l'utilisateur en train de communiquer. La face 9 renvoie alors le son de la voix vers un microphone 11 situé sur la face avant du corps 1 entre l'axe 4 et l'écouteur 2. Le trajet du son est illustré par la flèche 12.

Lorsque la palette 3 est en position repliée, elle est rabattue contre une partie de la face avant du corps comportant le microphone 11 et un clavier de numérotation 13.

Le terminal comprend en outre un bloc accumulateur amovible 14 qui, conformément à l'invention, fait partie intégrante de la palette 3 lorsqu'il est à l'état monté.

A cet effet, le socle 8 est réalisé sous la forme d'un tube rectangulaire applati, ouvert sur une face frontale de sa périphérie du côté opposé à l'axe 4 et fermé du côté de l'axe 4. Le bloc accumulateur 14 s'emboîte à la manière d'un tiroir dans le logement parallélipipédique 16 défini par ce tube. En fin d'insertion, un bossage 17 du bloc 14 s'engage dans un évidement correspondant 18 de la paroi intérieure du socle 3 pour effectuer un verrouillage amovible.

Le bloc 14 contient une batterie d'accumulateur rechargeable au Cadmium/Nickel, ou de préférence une batterie d'accumulateur du type connu sous le nom de Nickel-Métal-Hydrogène Ni(M)H, ou de manière encore plus préférable du type connu sous le nom de Lithium rechargeable. Cet ordre de préférence correspond à l'ordre de compacité croissante.

Le bloc 14 comporte sur sa face avant, relativement au sens d'engagement, au moins deux contacts rigides 19 qui, lorsque le bloc 14 est verrouillé dans le socle 8, sont en appui sur deux contacts élastiques 21 aménagés au fond du logement 16. Les deux contacts 21 sont reliés par un câble souple 22 avec l'électronique située à l'intérieur du corps 1. Le câble 22 est de préférence du type plat en cuivre.

Le câble 22 peut par exemple circuler entre le tourillon 7 et une languette en forme de secteur cylindrique 23 également solidaire du socle 8. La languette 23 est coaxiale avec le tourillon 7 et entoure celui-ci à une certaine distance radiale. Le boîtier 1 comporte sur sa face arrière une lèvre 24 assurant une certaine étanchéité avec la languette 23 quelle que soit la position angulaire du socle 8 autour de l'axe 4 par rapport au boîtier 1, et notamment en ses deux positions extrêmes.

Le bloc 14 comporte à son extrémité opposée aux contacts rigides 9 une région de préhension 26 qui reste apparente à l'extérieur du logement 16 quand le bloc 14 est en position de service.

La face avant du corps 1 présente dans la région qui est recouverte par la palette 3 en position repliée, un décrochement 27 d'une profondeur suffisante pour accueillir l'épaisseur de la palette repliée, de façon qu'une face arrière 28 de la palette 8 soit sensiblement dans le prolongement de la partie non décrochée 29 de la face avant 1 lorsque la palette est repliée. Comme représenté à la figure 1, cette région 29 comporte en plus de l'écouteur 2, un écran de visualisation 31 permettant à l'utilisateur de percevoir certaines informations même lorsque la palette 8 est repliée, alors que le terminal fonctionne en attente.

Suivant l'invention le bloc accumulateur constitue lui-même la palette et définit en particulier la surface de réflexion du son vers le microphone. Dans ce cas, le socle n'est plus qu'une courte monture articulée au corps. On peut même faire disparaître totalement le socle, le bloc comportant alors des moyens d'articulation encliquetables sur des moyens complémentaires portés par le corps 1, avec un système de contacts tournants dans cette articulation.

## Revendications

1. Terminal radiotéléphonique portatif, comprenant un corps (1), un bloc accumulateur (14) amovible, et une palette (3),cette palette (3) étant articulée au corps (1) du terminal entre une position de service dans laquelle elle se trouve devant la bouche de l'utilisateur et une position rabattue sur le corps (1), caractérisé en ce que cette palette constitue un réflecteur destiné à renvoyer le son vers un microphone,et en ce que le bloc accumulateur (14) constitue en lui-même ladite palette (3).

2. Terminal selon la revendication 1, caractérisé en ce que la palette (3) comporte une courte monture articulée au corps.

3. Terminal selon la revendication 1, caractérisé en ce que le bloc accumulateur comporte des moyens d'articulation encliquetables sur des moyens complémentaires portés par le corps (1), avec un système de contacts tournants dans cette articulation.

4. Terminal selon l'une des revendications 1 à 3, caractérisé en ce que le bloc accumulateur (14) est choisi parmi les accumulateurs du type à Nickel-Métal-Hydrogène et les accumulateurs du type à Lithium rechargeable.

## Patentansprüche

1. Tragbares Funkfernsprechgerät mit einem Körper (1), einem abnehmbaren Akkumulatorblock (14) und einem Spatel (3), wobei der Spatel (3) an den Körper (1) des Gerätes zwischen einer Arbeitsposition, in der er sich vor dem Mund des Benutzers befindet, und einer gegen den Körper (1) eingeklappten Position beweglich angelenkt ist, dadurch gekennzeichnet, dass dieser Spatel einen zum Umlenken von Schall zu einem Mikrophon bestimmten Reflektor bildet, und dass der Akkumulatorblock (14) selbst den Spatel (3) bildet.

2. Endgerät nach Anspruch 1, dadurch gekennzeichnet, dass der Spatel (3) eine an den Körper angelenkte kurze Halterung umfasst.

3. Endgerät nach Anspruch 1, dadurch gekennzeichnet, dass der Akkumulatorblock Gelenkmittel umfasst, die an von dem Körper (1) getragenen komplementären Mitteln einrastbar sind, mit einem System von in diesem Gelenk rotierenden Kontakten.

4. Gerät nach einem der Ansprüche 1 bis 3, dadurch gekennzeichnet, dass der Akkumulatorblock (14) unter den Akkumulatoren vom Nickel-Metallhydrid- und Lithium-Ionentyp ausgewählt ist.

## Claims

1. Portable mobile telephone comprising a body (1), a removable battery (14), and a flap (3) hinged to the body (1) to move between an operative position in which it is located in front of the mouth of the user and a position folded on top of the body (1), characterized in that said flap consists of a reflector designed to redirect the sound towards a microphone and in that the battery (14) constitutes said flap (3) itself.

2. Telephone according to claim 1, characterized in that the flap (3) includes a short mount hinged to the body.

3. Telephone according to claim 1, characterized in that said battery includes articulation means which snap onto complementary means carried by the body (1), this articulation incorporating a system of rotary contacts.

4. Telephone according to any of claims 1 to 3, characterized in that the battery (14) is chosen from nickel-metal-hydrogen type batteries and rechargeable lithium type batteries.
